# FASCICULE DE BREVET EUROPEEN

(11) **EP 4 246 890 B1**
(45) Date de publication et mention de la délivrance du brevet: **02.12.2026**
(21) Numéro de dépôt: 23161677.2
(22) Date de dépôt: 14.03.2023
(51) Int. Cl.: H04L 9/40, H04L 67/08

(54) **SYSTEME D'ANALYSE AUTOMATISEE DES ACTIONS D'UN UTILISATEUR CONNECTE A DISTANCE SUR UN SERVEUR**
SYSTEM ZUR AUTOMATISIERTEN ANALYSE DER AKTIONEN EINES FERNVERBUNDENEN BENUTZERS AUF EINEM SERVER
SYSTEM FOR AUTOMATED ANALYSIS OF ACTIONS OF A USER REMOTELY CONNECTED TO A SERVER

(30) Priorité: 15.03.2022 FR 2202249
(43) Date de publication de la demande: 20.09.2023
(73) Titulaire: Serenicity, 42000 Saint-Etienne (FR)
(72) Inventeur: ELSEN, Cyrille, 42240 UNIEUX (FR); VEYRE, Thierry, 42100 SAINT-ETIENNE (FR)
(74) Mandataire: Ipsilon

(56) Documents cités:
- CN-A- 107 194 394
- CN-A- 112 333 203
- CN-B- 102 223 368
- US-A1- 2013 138 765
- US-A1- 2013 275 579
- US-A1- 2019 334 950
- USSATH MARTIN ET AL: "Insights into Encrypted Network Connections: Analyzing Remote Desktop Protocol Traffic", 2016 24TH EUROMICRO INTERNATIONAL CONFERENCE ON PARALLEL, DISTRIBUTED, AND NETWORK-BASED PROCESSING (PDP), IEEE, 17 February 2016 (2016-02-17), pages 585 - 589, XP032888579, [retrieved on 20160331], DOI: 10.1109/PDP.2016.38

## Description

### Domaine de l'invention

L'invention concerne un système d'analyse automatisée des actions d'un utilisateur connecté à distance sur un serveur. L'invention permet, par exemple, de caractériser les agissements d'un pirate informatique connecté sur un serveur.

L'invention trouve une application particulièrement avantageuse pour améliorer la vitesse d'analyse d'actions perpétrées par des pirates informatiques et par exemple enregistrées par un dispositif d'enregistrement d'intrusion informatique.

Ainsi, l'invention peut être utilisée principalement dans le domaine technique de la sécurité informatique et plus particulièrement dans l'analyse d'attaques informatiques en vue d'activer des contre-mesures efficaces à ces attaques et éventuellement d'en poursuivre les responsables.

### Etat de la technique

Le Demandeur développe des solutions particulièrement pertinentes pour capter les actions d'un pirate informatique à son insu. Pour ce faire, le brevet FR3079642 décrit l'utilisation d'un serveur leurre avec une adresse IP référencée sur un système de noms de domaine pour attirer les pirates informatiques à se connecter sur ce serveur tout en pensant qu'ils peuvent impunément perpétuer des activités illégales. En complément de cette première innovation, le Demandeur a également déposé le brevet EP 3 644 146 qui décrit l'enregistrement des actions d'un utilisateur sur un serveur permettant de capter une vidéo des agissements d'un pirate informatique et éventuellement d'enregistrer les frappes de touches du clavier de l'utilisateur.

Ces innovations du Demandeur sont tellement efficaces qu'en quelques années seulement, et avec moins de dix serveurs leurres, le Demandeur a pu capter des millions d'heures d'enregistrement des actions de pirates informatiques.

Cependant, les pirates informatiques commettent des méfaits très hétérogènes et il est important de distinguer la nature de ces méfaits pour agir rapidement, notamment lorsque la sécurité de personnes risque d'être engagée.

En effet, lorsqu'un pirate informatique est connecté sur un serveur leurre, il peut réaliser un grand nombre d'actions malveillantes et le Demandeur est face à un problème d'analyse et de caractérisation des actions réalisées par ces pirates informatiques pour informer les bons interlocuteurs en fonction des méfaits commis.

Typiquement, lorsque qu'un pirate informatique tente de déployer un crypto virus sur un serveur d'une entreprise, il convient de contacter l'administrateur informatique de l'entreprise. Pour un autre exemple, lorsqu'un pirate informatique tente des attaques par hameçonnage sur les boites de réception des étudiants d'une université, il convient de contacter l'administrateur informatique de l'université.

Pour caractériser les actions des pirates informatiques et contacter rapidement les bons interlocuteurs, il est aujourd'hui nécessaire de demander à des opérateurs de visionner les enregistrements représentant les périodes dans lesquels un pirate informatique s'est connecté sur un serveur leurre. Ce travail manuel est particulièrement long et fastidieux si bien qu'il peut être nécessaire d'attendre plusieurs heures ou plusieurs jours avant qu'un enregistrement ne puisse être analysé et traité par un opérateur, notamment lorsque de nombreux enregistrements sont captés simultanément. Or, certaines tensions politiques engendrent des accroissements ponctuels du nombre d'intrusions informatiques sur les serveurs leurres, par exemple en temps de guerre numérique.

Pour résoudre ce problème de caractérisation des actions d'un pirate informatique, ou même de tout utilisateur connecté sur un serveur, il serait envisageable de faire une transcription de tout le texte présent sur chaque image des enregistrements au moyen d'outils d'océrisation. Cependant, les données générées par ce type de méthode seraient trop volumineuses et cette solution présenterait un problème d'interprétation et de stockage des informations générées.

Il serait également envisageable d'échantillonner le flux vidéo capté afin de réaliser une transcription de l'image en texte toutes les minutes ou toutes les 10 minutes par exemple. Cette solution permettrait de limiter le volume des données générées mais risquerait de fournir une analyse pour laquelle certains méfaits des pirates informatiques échappent à l'analyse, lorsqu'ils sont commis entre deux instants de transcription des images.

Le problème technique de l'invention est donc de déterminer comment automatiser l'analyse des actions réalisées par un utilisateur sur un serveur, par exemple pour analyser automatiquement les actions d'un pirate informatique sur un serveur leurre.

La demande de brevet US 2013/138765 A1 décrit un dispositif de capture et d'enregistrement de données de sessions RDP (Remote Desktop Protocol) utilisant un agent OCR pour reconnaître dans des captures d'écrans les commandes passées à distance lors de sessions RDP.

### Exposé de l'invention

Pour répondre à ce problème technique, l'invention propose un dispositif selon la revendication 1, permettant de détecter des commandes spécifiques réalisées par l'utilisateur et de réaliser une transcription des images en texte uniquement lorsqu'une commande spécifique prédéfinie a été détectée.

Par exemple, il est possible de définir ces commandes prédéfinies comme étant l'appui de l'utilisateur sur les touches « entrée » ou « tabulation » du clavier ou d'un clic de souris. Ainsi, à chaque fois que l'utilisateur appuie sur l'une de ces touches ou d'un clic de souris, une image de la session de l'utilisateur est captée et retranscrite au format texte au moyen d'un outil de transcription, par exemple d'océrisation.

L'océrisation permet de retranscrire au format texte toutes les chaînes de caractères présentes sur une image et il est donc possible de capter les URL inscrites dans un navigateur, les lignes utilisées dans une invite de commande ou encore tout le contenu d'un courriel écrit par un utilisateur.

Par exemple, si un pirate informatique utilise les cartes bancaires volées pour faire des commandes frauduleuses sur un site marchand, il doit écrire ou copier/coller toutes les informations de la carte bancaires et, lorsqu'il appuie sur les touches « entrée » ou « tabulation » pour changer de champ, les informations écrites ou copiées par le pirate informatique sont captées et retranscrites en texte.

Suite à cette retranscription générée de manière asynchrone, c'est-à-dire suite à la détection de l'utilisation d'une commande prédéfinie par l'utilisateur, l'ensemble du texte retranscrit peut être analysé pour détecter des chaînes de caractères prédéterminées. Cette détection des chaînes de caractères prédéterminées peut être réalisée en utilisant une expression de type « preg_match ».

Par exemple, il peut être recherché des chaînes de caractères analogues à une URL, à des numéros de carte bancaire, à des codes postaux, à des adresses internet, à des adresses de messagerie ou encore à des numéros de comptes bancaires. La détection d'une URL peut être réalisée par la recherche d'une chaîne de caractère contenant les suites de caractères « url », « // » ou « www ».

La découverte d'un numéro de carte bancaire peut être conditionnée à la détection d'une chaîne de caractère de 16 chiffres alors que la découverte d'un code postal peut résulter de la détection d'une chaîne de caractère d'exactement 5 chiffres. Pour détecter une adresse internet, ou adresse IP, 4 chaînes de caractères de 3 chiffres reliées par des « . » peut être recherchée pour une adresse IPv4 et un ensemble de 8 chaînes de caractères reliées par des « : » peut être associée pour une adresse IPv6. Une adresse de messagerie peut être détectée par une chaîne de caractère comportant un « . » et un « @ ». De la même manière, pour détecter un numéro de comptes bancaires français sous le format IBAN, une chaîne de caractère contenant 2 lettres suivies de 23 chiffres est recherchée.

Lorsque ces chaînes de caractères prédéterminées sont détectées, il est possible de créer des scénarii d'analyse des actions de l'utilisateur sur la base des chaînes de caractères identifiées.

Par exemple, lorsqu'il est identifié que l'utilisateur a téléchargé un logiciel au format « .exe » et qu'il lance l'exécution de ce logiciel dans une invite de commande, il peut être créé un scénario dans lequel le nom du programme informatique exécuté est recherché dans une base de données.

Si ce nom du programme informatique correspond à un rançongiciel ou à un logiciel de minage de crypto monnaie, l'action de l'utilisateur peut être caractérisée dans une catégorie correspondant à une catégorie de « piratage direct ».

Par ailleurs, si le nom du logiciel utilisé est associé à des attaques de type force brute ou DDOS, les actions de l'utilisateur peuvent être caractérisées comme étant des actions de « piratage indirect ».

Pour un autre exemple, si des numéros de carte bancaires ou les numéros de comptes bancaires sont détectés, il peut être analysé des « actions de fraude » et le nom du site Internet marchand peut être recherché pour contacter automatiquement l'administrateur informatique connu pour ce site marchand.

Dans un autre exemple, si un grand nombre de courriels sont détectés, des « actions de fraude » de type hameçonnage peuvent être caractérisées et un courriel d'information peut être transmis automatiquement à toutes les cibles de l'attaque.

En outre, les textes issus de l'océrisation des différentes images de la session de l'utilisateur peuvent être utilisés comme moyen de preuve des méfaits réalisés par un pirate informatique et peuvent alimenter un moteur de recherche. Par ailleurs, les textes issus de l'océrisation peuvent être traduit automatique, par exemple en identifiant la langue du clavier utilisée par l'utilisateur.

Par ailleurs, dans l'ensemble du flux vidéo capté, une partie du flux vidéo peut correspondre à une « actions de fraude » alors qu'une autre partie du flux vidéo peut correspondre à des tentatives de « piratage direct » ou de « piratage indirect ». Ainsi, pour une même vidéo, plusieurs caractérisations peuvent être détectées pour des instants distincts de la vidéo et celle-ci peut être découpée pour associer chaque partie à la caractérisation associée.

Pour conclure, l'invention propose d'utiliser plusieurs outils :
- un outil de captation d'une image d'une session d'un utilisateur commandé de manière asynchrone par la détection de l'appui sur une commande prédéfinie, par exemple la commande entrée ou la commande tabulation du clavier ou d'un clic de souris ;
- un outil de transcription en texte de l'image captée par l'outil de captation ;
- un outil d'analyse de chaînes de caractères prédéterminées à l'intérieur du texte capté par l'outil de transcription ; et
- un outil de caractérisation des actions réalisées par l'utilisateur en fonction des chaînes de caractères détectées.

Pour conclure, l'invention permet d'automatiser la détection des actions d'un utilisateur connecté sur un serveur, notamment les actions de pirates informatiques, de sorte à pouvoir informer plus rapidement et plus efficacement les victimes de fraude ou de tentative de piratage et les autorités compétentes.

### Description sommaire des figures

La manière de réaliser l'invention ainsi que les avantages qui en découlent, ressortiront bien des modes de réalisation qui suivent, donnés à titre indicatif mais non limitatif, à l'appui des figures dans lesquelles :
[Fig. 1] La figure 1 est une représentation schématique d'un système d'information muni d'un dispositif d'analyse automatisée des actions d'un utilisateur connecté à distance sur un serveur selon un mode de réalisation de l'invention ;
[Fig. 2] La figure 2 est un ordinogramme des étapes de création du dispositif d'enregistrement d'intrusion informatique de la figure 1 ; et
[Fig. 3] La figure 3 est une représentation schématique d'un système d'information muni d'un dispositif d'analyse automatisée des actions d'un utilisateur connecté à distance sur un serveur selon un autre mode de réalisation de l'invention .

### Description détaillée de l'invention

Dans la description qui suit, les adresses Internet sont présentées sur une forme correspondant au protocole IPv4, c'est-à-dire la quatrième version du protocole Internet avec quatre séries de chiffres reliées par des points. En variante, d'autres protocoles peuvent être utilisés sans changer l'invention, notamment le protocole IPv6.

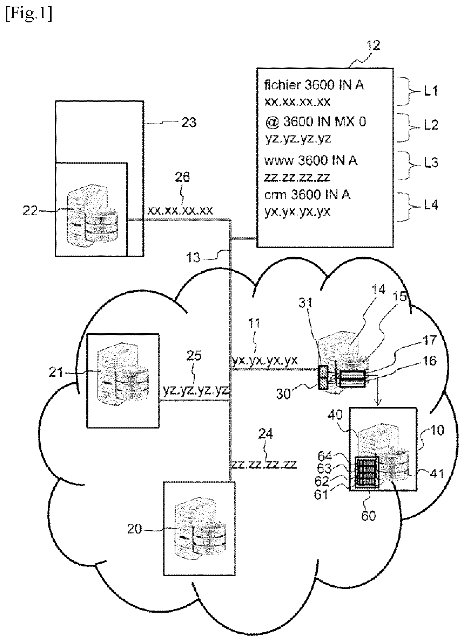

La figure 1 illustre un système informatique d'une société **23** intégrant un dispositif d'enregistrement d'intrusion informatique **10.** Le système informatique comporte un serveur **20** hébergeant un site Internet de la société **23** et un serveur **21** gérant les messages électroniques de la société **23.** Ces deux serveurs **20-21** sont hébergés chez des prestataires de la société **23** et ils ne sont pas situés dans les locaux de la société **23.**

La société **23** comporte également un serveur de fichiers **22** hébergé et géré en interne de la société **23.** En utilisant le réseau Internet **13,** le serveur **20,** hébergeant le site Internet, est accessible depuis l'adresse Internet **24** zz.zz.zz.zz. Le serveur **21,** gérant les messages électroniques, est accessible depuis l'adresse Internet **25** yz.yz.yz.yz et le serveur de fichiers **22** est accessible depuis l'adresse Internet **26** xx.xx.xx.xx.

Ces acteurs sont référencés dans un système de noms de domaine 12 dans lequel une ligne **L1** concerne la définition du serveur de fichiers **22,** une ligne **L2** concerne la définition du serveur de messagerie **21** et une ligne **L3** concerne la définition du serveur d'hébergement du site Internet **22.**

Cette structure classique est décrite uniquement à titre d'exemple. Dans cet exemple, l'invention est présentée dans le contexte de la sécurité numérique d'une société **23.** En variante, une telle sécurité informatique peut être mise en œuvre pour protéger tous types de système informatique, par exemple les systèmes informatiques présents dans les collectivités.

Outre ces éléments classiques d'un système informatique, le système informatique de la fig. 1 comporte un dispositif d'enregistrement d'intrusion informatique **10** comprenant un serveur d'applications **14** servant de leurre accessible depuis une adresse Internet **11** yx.yx.yx.yx et associé à un serveur d'enregistrement **40** configuré pour enregistrer les intrusions informatiques sur le serveur d'applications **14,** par exemple un dispositif tel que décrit dans le brevet EP 3 644 146.

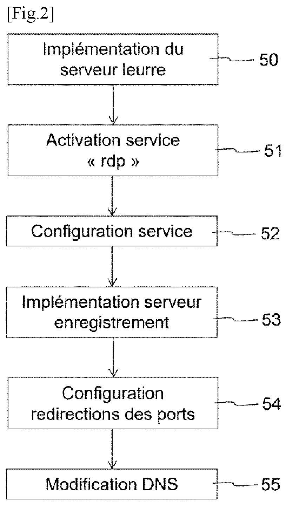

Le procédé de création de ce dispositif d'enregistrement d'intrusion informatique **10** est décrit en référence à la figure 2. Dans une première étape **50,** le serveur d'applications **14** est créé pour être accessible depuis une adresse Internet **11.** De préférence, un serveur Microsoft^{©} est utilisé. En outre, l'adresse Internet **11** est choisie de sorte à correspondre à une situation géographique dans le même pays, voir dans la même région que la société **23.**

Lorsque le serveur d'applications **14** est créé, il est paramétré dans une étape **51** en activant des services **15** souvent cibles de piratage.

Pour créer un serveur leurre efficace, au moins un service activé **15** est un service **16** permettant de prendre un contrôle à distance du serveur d'applications **14,** tels que le service « RDP ». En activant ce service de contrôle à distance **16,** un code d'accès est demandé. Il est préférable de prendre un code d'accès particulièrement peu robuste pour ce service de contrôle à distance **16,** par exemple un code par défaut de type « admin/admin ».

Lorsque le service de contrôle à distance **16** est activé, il convient de le configurer. A cet effet, dans une étape **52,** le port d'accès par défaut à ce service de contrôle à distance **16** peut être modifié de sorte que le service de contrôle à distance **16** soit associé à un port d'écoute **30,** par exemple en utilisant le port d'écoute **30** TCP 3390 au lieu du port par défaut TCP 3389.

Ensuite, il est possible de modifier les fonctionnalités du service de contrôle à distance **16** pour contraindre les actions du pirate informatique, par exemple en supprimant la possibilité de réaliser des copier/coller et des remontées de lecteur local via le protocole « bureau à distance » dans l'interface du service de contrôle à distance **16.**

Le but de ce système, objet du brevet EP 3 644 146, est d'enregistrer les actions réalisées par le pirate informatique sur le serveur d'applications **14.** Pour ce faire, un serveur d'enregistrement **40** est implémenté dans une étape **53.** Ce serveur d'enregistrement **40** est associé à une base de données **41** de sorte à stocker les actions réalisées par le pirate informatique sur un serveur indépendant du serveur d'applications **14.**

Pour réaliser cet enregistrement, un service est activé sur le serveur d'enregistrement **40** et l'enregistrement peut être réalisé sous la forme d'un journal d'activité du pirate informatique intégrant toutes les commandes utilisées par le pirate informatique.

De préférence, le serveur d'enregistrement **40** procède à un enregistrement vidéo des actions réalisées sur une interface du service de contrôle à distance **16** du serveur d'applications **14.**

Outre l'enregistrement, le serveur d'enregistrement **40** peut mettre en œuvre une identification des actions du pirate informatique ou des informations de connexion utilisées par le pirate informatique.

Lorsque le serveur d'enregistrement **40** est opérationnel, le serveur d'applications **14** peut être modifié pour créer un port virtuel **31** dans une étape **54.** De préférence, ce port virtuel **31** correspond au port par défaut du service de contrôle à distance **16,** par exemple le port TCP 3389. Un service fantôme **17** est ensuite créé sur le serveur d'applications **14** pour faire le lien entre ce serveur d'applications **14** et le serveur d'enregistrement **40.** Ce service fantôme **17** écoute sur le port TCP 3389, envoie le flux vidéo et les frappes clavier sur le serveur d'enregistrement **40** et redirige le flux initial sur le port TCP 3390 du serveur d'application **14.** En plus du flux vidéo et des frappes clavier, le service fantôme **17** peut envoyer au serveur d'enregistrement **40** le contenu du presse-papier, notamment du texte ou une image, et/ou les fichiers et dossiers échangés entre le terminal de l'utilisateur et le serveur d'applications **14,** et/ou les urls de flux Internet sortant du serveur d'application **14.** Ce service **17** est appelé service fantôme car il ne doit pas être détecté par le pirate informatique. Pour ce faire, il peut être masqué ou posséder un nom générique.

Le service fantôme **17** ne modifie pas le contenu des informations arrivant sur le port virtuel **31** avant de les retransmettre sur le port d'écoute **30** si bien que le pirate informatique retrouve une expérience utilisateur traditionnel.

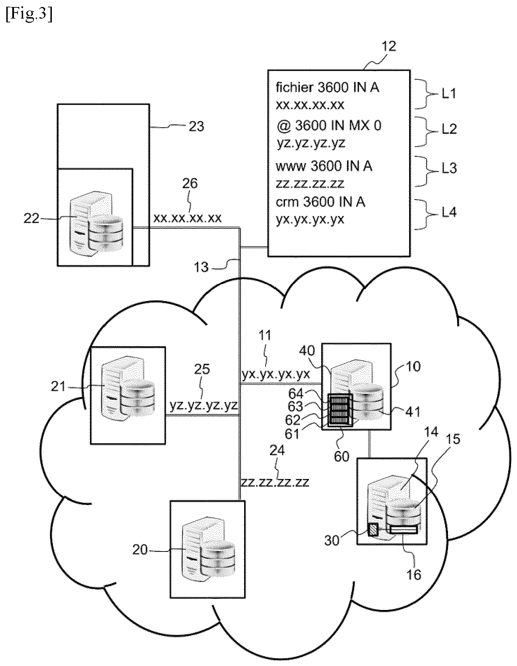

La figure 3 illustre un système informatique d'une société **23** intégrant un dispositif d'enregistrement d'intrusion informatique **10,** alternatif au système illustré en fig. 1. Le système informatique illustré en fig. 2 est similaire à celui de la fig. 1, duquel il diffère en ce que le serveur d'enregistrement **40** est positionné en proxy sur le réseau, en coupure du serveur d'applications **14.** Dans ce système, le port d'accès par défaut au service de contrôle à distance **16** du serveur d'applications **14** n'est pas modifié, le port d'écoute **30** reste le port TCP par défaut, le port 3389. Il n'y a pas nécessairement de service fantôme implémenté sur le serveur d'applications **14.** Le serveur d'enregistrement **40** écoute sur le port TCP 3389, enregistre le flux vidéo et les frappes clavier, et redirige le flux initial sur le port TCP 3390 du serveur d'applications **14.** En plus du flux vidéo et des frappes clavier, le serveur d'enregistrement **40** peut enregistrer le contenu du presse-papier, notamment du texte ou une image, et/ou les fichiers et dossiers échangés entre le terminal de l'utilisateur et le serveur d'applications **14,** et/ou les urls de flux Internet sortant du serveur d'application **14.** L'absence de port virtuel et de service fantôme permet de rendre plus difficilement détectable à l'utilisateur, le fait que ses agissements sur le serveur d'applications **14** sont enregistrées.

Pour que ce serveur d'applications **14** servant de leurre soit facilement détectable par un pirate informatique, une étape **55** consiste à modifier le système de noms de domaine **12** pour indiquer la présence du serveur d'application **14** sur le système d'information. Pour ce faire, une ligne **L4** est ajoutée au système de noms de domaine **12** en référençant l'adresse Internet **11** du serveur d'applications **14** servant de leurre.

Dans la description du serveur d'applications **14** servant de leurre, il peut être défini que le serveur d'applications **14** correspond à un serveur Microsoft^{©} et que le serveur d'applications **14** est utilisé avec des services **15** de contrôle à distance.

Dans l'exemple de la figure 1, la ligne **L4** est définie en utilisant la description « crm » pour décrire l'activité du serveur d'applications **14.** Cette description « crm » correspond à un serveur gestionnaire de relation client, pour « *Customer Relationship Management »* dans la littérature anglo-saxonne. Ce type de serveur centralise un grand nombre d'informations sur les clients et les produits d'une société afin de créer une offre personnalisée à chaque client en fonction de ses besoins. Un serveur gestionnaire de relation client est souvent implémenté sur un serveur Microsoft^{©} avec un nombre de services importants, notamment des services permettant un accès à distance. Ainsi, un pirate informatique qui détecte cette description « crm » dans le système de noms de domaine **12** devrait être très incité à tenter une intrusion sur le serveur associé à cette description « crm ».

En outre, dans la définition du système de noms de domaine **12,** il est possible d'associer les ports d'accès à chaque service **15** du serveur d'applications **14.** En indiquant que le port d'accès au service de contrôle à distance **16** correspond au port virtuel **31,** le pirate informatique tentera d'accéder au service de contrôle à distance **16** uniquement par le port virtuel **31.**

Ainsi, seul le port virtuel **31** est exposé sur Internet pour le service de contrôle à distance **16** et une analyse distante de ce service avec des outils de type Telnet renvoi une réponse identique au port par défaut du service de contrôle à distance **16.** Le port d'écoute **30** du service de contrôle à distance **16** n'est donc pas exposé sur Internet, ce qui rend le leurre indétectable depuis Internet.

La retransmission du flux vidéo sur le serveur d'enregistrement **40** par le service fantôme **17** permet donc d'enregistrer les actions du pirate informatique sur le serveur d'enregistrement **40** à l'insu du pirate informatique.

La présente invention propose un dispositif d'analyse automatisée **60** des actions d'un utilisateur connecté à distance sur un serveur. Le dispositif d'analyse automatisée **60** peut être intégré dans le système informatique de la fig. 1, et décrit plus haut, par exemple implémenté sur le serveur d'enregistrement **40,** ou sur un serveur d'analyse distinct du serveur d'enregistrement **40.**

Le dispositif d' analyse automatisée **60** peut également être intégré dans tout autre système informatique comportant au moins un serveur sur lequel pourrait se connecter un utilisateur, malveillant ou non, pour lequel il est recherché de caractériser les actions.

Selon l'invention, le dispositif d'analyse automatisée **60** comporte un outil de captation **61** d'au moins une image d'une session d'un utilisateur connecté à distance sur un serveur, notamment une image de l'interface graphique de cet outil d'accès à distance. L'outil de captation **61** est commandé de manière asynchrone, par la détection de l'utilisation d'une commande prédéfinie telle qu'une commande du clavier « Entrée » ou « Tabulation », ou encore un clic de souris.

De préférence, l'outil de captation **61** est hébergé sur un serveur distinct du serveur auquel est connecté l'utilisateur. L'outil de captation **61** opère à partir du flux vidéo de l'interface graphique de la session de l'utilisateur, et du flux de commandes effectuées par l'utilisateur, telles que les commandes clavier et souris, associées temporellement au flux vidéo. Le flux vidéo et de commandes peuvent, par exemple, être récupérés par un service fantôme **17,** typiquement un service Microsoft^{©} Windows^{©} ou un daemon Linux installé sur un système serveur d'enregistrement **40.** L'outil de captation **61** peut traiter ces informations en temps réel, c'est-à-dire immédiatement après qu'il y ait accès, ou il peut les traiter avec un certain délai, par exemple s'il n'a pas de ressources de calcul disponibles pour les traiter immédiatement. Par ailleurs, l'outil de captation **61** peut être configuré pour traiter tous les flux vidéo captés par un ou plusieurs serveurs d'applications **14** servant de leurre.

A partir des flux vidéo et de la détection des commandes prédéfinies, l'outil de captation **61** extrait donc des images du flux vidéo, ces images correspondant aux instants auxquels les commandes prédéfinies dans l'outil de captation **61** ont été utilisées par l'utilisateur.

Lorsqu'au moins une image est extraite par l'outil de captation **61,** cette image est traitée par un outil de transcription **62,** qui détecte le texte présent dans l'image et l'extrait par une des méthodes connues d'océrisation.

Cet outil de transcription **62** peut être implémenté dans le même programme que l'outil de captation **61** ou dans un programme indépendant, typiquement un service Microsoft^{©} Windows^{©} ou un daemon Linux installé sur un système du serveur d'enregistrement **40.** Par ailleurs, l'outil de captation **61** et l'outil de transcription **62** peuvent être implémentés sur deux serveurs distincts.

En ce qui concerne la transcription réalisée, elle peut mettre en œuvre un algorithme de reconnaissance optique de caractères tel que Tesseract, Google^{©} Cloud Vision ou encore Amazon Textract^{©}.

Les textes extraits par l'outil de transcription **62** peuvent être traduits par un outil de traduction automatique, tel que Google^{©} Translate ou encore Deepl^{©}. La langue d'origine peut être automatique détectée par l'outil de transcription **62,** ou elle peut être déterminée par la langue du clavier utilisé par l'utilisateur.

Par ailleurs, un algorithme de description d'image peut également être mis en œuvre en même temps que la reconnaissance de caractère pour permettre de participer à la caractérisation des actions de l'utilisateur. Un tel algorithme génère, à partir de l'image, un ensemble de mots-clés listant les éléments qu'il y a identifié, ou pour les plus perfectionnés, des phrases décrivant l'image, décrivant par exemple l'agencement de ces éléments dans l'image. Cette description d'image peut par exemple permettre de détecter si l'utilisateur utilise un navigateur, et dans ce cas sur quel type de site il est en train de naviguer, par exemple le site Internet d'une banque, ou un site marchand. Il peut aussi être détecté le fait que l'utilisateur est en train d'utiliser une invite de commandes.

Le logiciel de Microsoft^{©} Seeing AI peut par exemple être utilisé pour générer une description texte d'une image graphique.

Le texte extrait est ensuite analysé par un outil d'analyse **63,** qui le compare à des chaînes de caractères de types prédéterminés, afin de détecter les informations particulières telles que les numéros de comptes bancaires, les numéros de cartes bancaires, les codes postaux, les numéros de téléphone, les adresses e-mails, les adresses IP, etc. Pour rechercher ces chaînes de caractères, l'outil d'analyse **63** peut utiliser une expression de type « preg_match ».

L'outil d'analyse 63 est préférentiellement associé à une interface de gestion permettant à un administrateur de définir les informations recherchées et les stratégies de recherches utilisées. Par exemple, lorsque l'administrateur configure l'outil d'analyse 63 pour rechercher des URL, il peut mettre en place une stratégie de recherche d'une chaîne de caractère contenant les suites de caractères « url », « // » ou « www ». En outre, beaucoup d'informations peuvent être recherchées simultanément et l'administrateur peut également mettre en place une stratégie de recherche d'un ou plusieurs des éléments suivants :
- une chaîne de caractère de 16 chiffres pour détecter des numéros de cartes bancaires,
- une chaîne de caractère d'exactement cinq chiffres pour détecter un code postal,
- un ensemble de quatre chaînes de caractères de trois chiffres reliées par des « . » pour détecter une adresse internet IPv4,
- un ensemble de huit chaînes de caractères reliées par des « . » pour détecter une adresse internet IPv6,
- une chaîne de caractère comportant un « . » et un « @ » pour détecter une adresse de messagerie
- une chaîne de caractères contenant 2 lettres suivies de 23 chiffres pour détecter un numéro de compte français sous le format IBAN, et/ou
- une chaîne de caractères commençant par un « + » et suivie de 11 chiffres ou par un « 0 » et suivie de 9 chiffres pour détecter un numéro de téléphone.

L'outil d'analyse **63** peut être configuré pour prendre en compte les résultats d'un algorithme de description d'image générés par l'outil de transcription **62.** Ceci permet à l'outil d'analyse **63** d'opérer selon une stratégie de recherche la plus pertinente possible, par exemple en orientant la détection en priorité vers certains types de chaînes de caractères. Par exemple, si un site de banque est ouvert, il peut être recherché en priorité un numéro de compte ou de carte bancaire. Cette orientation de la stratégie de recherche peut être automatisé, ou il peut s'agir d'une recommandation sujette à la validation d'un administrateur humain, par exemple sur l'interface de gestion mentionnée plus haut.

En fonction des types de chaînes de caractères détectées, un outil de caractérisation **64** détermine alors le type d'action que l'utilisateur est probablement en train d'effectuer : fraude, hameçonnage, rançongiciel, lancement d'un logiciel de minage de crypto monnaie, attaque de type force brut, DDOS, etc.

Par exemple, s'il est identifié que l'utilisateur a téléchargé un logiciel au format « .exe » et qu'il lance l'exécution de ce logiciel dans une invite de commande, l'outil de caractérisation **64** peut rechercher le nom du programme informatique exécuté dans une base de données. Si le nom du programme informatique exécuté correspond à un rançongiciel ou à un logiciel de minage de crypto monnaie, l'action de l'utilisateur peut alors être caractérisée dans une catégorie correspondant à une catégorie de « piratage direct ». Dans d'autres cas, si le nom du logiciel utilisé est associé à des attaques de type force brute ou DDOS, l'action de l'utilisateur peut être caractérisée comme étant une action de « piratage indirect ».

L'outil de caractérisation **64** peut également être configuré pour que si un numéro de carte bancaires ou un numéro de compte bancaire et un site Internet marchand sont détectés, l'action de l'utilisateur peut être caractérisée comme étant une action de « fraude ». Le nom du site Internet marchand peut alors être recherché pour contacter automatiquement l'administrateur informatique connu pour ce site marchand et lui envoyer un signalement.

L'outil de caractérisation **64** peut encore être configuré pour que lorsque le nombre de courriels détectés est supérieur à un seuil, par exemple 20 adresses mail pour une image, l'action de l'utilisateur peut être caractérisée comme étant une action de « fraude » de type hameçonnage. Un courriel d'information peut alors être transmis automatiquement à toutes les cibles de l'attaque.

Après caractérisation de l'attaque d'un utilisateur, un signalement peut être envoyé à certaines personnes clés, par exemple l'administrateur d'un site Internet, ou le responsable informatique d'une entreprise ou d'une institution, ou encore dans certains cas aux forces de l'ordre compétentes. Dans certains cas, le signalement peut être envoyé automatiquement, alors que dans d'autres cas, un administrateur peut décider ou non d'envoyer un signalement sur l'interface de gestion.

L'ensemble des textes issus de l'outil de transcription **62,** ou une partie d'entre eux, peut être stocké dans une base de données consultable par un moteur de recherche. Ainsi il est possible pour des victimes présumées d'attaques, des administrateurs de site marchand des agents de police, ou encore des juges de vérifier les actes réalisés lors d'une intrusion informatique. Cette base de données est de préférence apte à associer aux textes, un horodatage ainsi que des images voire une séquence vidéo. Ces dispositions sont particulièrement utiles lorsqu'une attaque a été perpétrée mais n'a pas été correctement caractérisée par le système, ou que le signalement n'a pas été bien émis, reçu ou traité. A l'aide de la base de données, il est alors possible de retrouver les preuves et éventuellement d'identifier le pirate informatique à l'origine de l'attaque.

La base de données peut aussi permettre de déclencher des alertes lorsque certains mots-clés sont captés par l'outil de captation **61.**

Une fois les images extraites du flux vidéo par l'outil de captation **61,** le flux vidéo dont elles proviennent peut être supprimé, afin d'optimiser l'espace de stockage, ou il peut être conservé, afin de conserver des preuves opposables éventuelles dans l'éventualités de poursuites judiciaires ou pour toute autre raison. Dans un mode préféré de l'invention, la décision de conserver ou non le flux vidéo n'est prise qu'après que l'outil de caractérisation **64** ait pu caractériser ou non les actions de l'utilisateur. Ainsi en l'absence de caractérisation, ou encore par exemple si l'outil de caractérisation **64** estime qu'il s'agit d'une attaque bénigne, le dispositif d'analyse **60** peut être configuré pour supprimer le flux vidéo. Au contraire, en cas de caractérisation d'une attaque sérieuse, le flux vidéo peut être conservé afin de pouvoir servir de moyen de preuve. Cette conservation peut être conditionnée à une étape de vérification manuelle, faisant intervenir un opérateur humain utilisant par exemple l'interface de gestion utilisée pour paramétrer l'outil d'analyse **63.**

L'invention permet ainsi d'amener un pirate *informatique* à pénétrer sur un serveur d'applications **14** servant de leurre afin d'enregistrer ces agissements, et de les caractériser de façon automatique. Cette démarche est à l'opposé des démarches existantes qui visent à limiter les possibilités d'actions des pirates informatiques. En effet, dans la démarche de l'invention, le pirate informatique est incité à perpétrer des actes de piratage dans un contexte contrôlé et propice à le démasquer. L'invention permet également de constituer une base de connaissance sur les cyber menaces.

## Revendications

1. Dispositif d'analyse automatisée **(60)** des actions d'un utilisateur connecté à distance sur un serveur **(14)** servant de leurre comportant un outil de captation **(61)** d'au moins une image d'une session dudit utilisateur, ledit outil de captation **(61)** étant commandé de manière asynchrone par la détection de l'utilisation d'au moins une commande prédéfinie; ledit dispositif d'analyse **(60)** comportant:
- un outil de transcription **(62)** en texte de l'au moins une image captée par l'outil de captation **(61),**
- un outil d'analyse **(63)** permettant de détecter au moins une chaîne de caractères prédéterminée à l'intérieur du texte capté par l'outil de transcription **(62)** ; et
- un outil de caractérisation **(64)** d'au moins une action réalisée par l'utilisateur en fonction de ladite au moins une chaîne de caractères détectée,
l'outil de caractérisation étant configuré pour que :
- lorsqu'il est identifié que l'utilisateur a téléchargé un logiciel au format « .exe » et qu'il lance l'exécution de ce logiciel dans une invite de commande, l'outil de caractérisation **(64)** recherche le nom du programme informatique exécuté dans une base de données et si le nom du programme informatique exécuté correspond à un rançongiciel ou à un logiciel de minage de crypto monnaie, l'action de l'utilisateur peut être caractérisée dans une catégorie correspondant à une catégorie de « piratage direct », et si le nom du logiciel utilisé est associé à des attaques de type force brute ou DDOS, l'action de l'utilisateur peut être caractérisée comme étant une action de « piratage indirect »,
- lorsqu'il est détecté un numéro de carte bancaire ou un numéro de compte bancaire et un site Internet marchand, l'action de l'utilisateur peut être caractérisée comme étant une action de « fraude », et
- lorsque le nombre de courriels détectés est supérieur à un seuil, l'action de l'utilisateur peut être caractérisée comme étant une action de « fraude » de type hameçonnage.

2. Dispositif d'analyse selon la revendication 1, ***dans lequel*** ladite commande prédéfinie correspond à la commande entrée et/ou la commande tabulation du clavier et/ou un clic de souris.

3. Dispositif d'analyse selon l'une des revendications 1 à 2, ***dans lequel*** ledit outil d'analyse **(63)** utilise une expression de type « preg_match ».

4. Dispositif d'analyse selon l'une des revendications 1 à 3, ***dans lequel*** les textes issus de l'outil de transcription **(62)** sont traduits de manière automatique, par exemple en identifiant la langue du clavier utilisée par l'utilisateur.

5. Dispositif d'analyse selon l'une des revendications 1 à 4, ***dans lequel*** l'outil d'analyse (63) permet de détecter :
- une URL, par exemple par la recherche d'une chaîne de caractère contenant les suites de caractères « url », « // » ou « www », et/ou
- un numéro de carte bancaire, par exemple par la recherche d'une chaîne de caractère de 16 chiffres, et/ou
- un code postal, par exemple par la recherche d'une chaîne de caractère d'exactement cinq chiffres, et/ou
- une adresse internet IPv4, par exemple par un ensemble de quatre chaînes de caractères de trois chiffres reliées par des « . », et/ou
- une adresse internet IPv6, par exemple par un ensemble de huit chaînes de caractères reliées par des « . », et/ou
- une adresse de messagerie, par exemple par une chaîne de caractère comportant un « . » et un « @ », et/ou
- un numéro de compte bancaire, par exemple un numéro de compte français sous le format IBAN, par une chaîne de caractère contenant 2 lettres suivies de 23 chiffres.

6. Dispositif d'analyse selon l'une des revendications 1 à 5, ***dans lequel*** l'outil de caractérisation **(64)** est configuré pour que, lorsqu'il est détecté un numéro de carte bancaires ou un numéro de compte bancaire et un site Internet marchand, le nom du site Internet marchand peut être recherché pour contacter automatiquement l'administrateur informatique connu pour ce site marchand.

7. Dispositif d'analyse selon l'une des revendications 1 à 6, ***dans lequel*** l'outil de caractérisation **(64)** est configuré pour que, lorsque le nombre de courriels détectés est supérieur à un seuil, un courriel d'information peut être transmis automatiquement à toutes les cibles de l'attaque.

8. Dispositif d'analyse selon l'une des revendications 1 à 7, ***configuré pour que*** les textes issus de l'outil de transcription **(62)** puissent alimenter un moteur de recherche.

## Patentansprüche

1. Automatische Vorrichtung **(60)** zur Analyse der Aktionen eines Anwenders, der sich von einem entfernten Standort aus mit einem Server **(14)** verbindet, welcher als Köder dient, der ein Tool **(61)** zum Erfassen mindestens eines Bildes einer Sitzung des Anwenders aufweist,
wobei das Erfassungstool **(61)** auf asynchrone Weise durch die Detektion der Verwendung mindestens eines vorbestimmten Befehls gesteuert wird;
wobei die Analysevorrichtung **(60)** Folgendes aufweist:
- ein Tool **(62)** zum Umwandeln des mindestens einen Bildes, welches das Erfassungstool **(61)** erfasst hat, in ein Textformat,
- ein Analysetool **(63)**, das es ermöglicht, mindestens eine vorbestimmte Zeichenkette innerhalb des Textes zu detektieren, welcher von dem Umwandlungstool **(62)** erfasst wurde; und
- ein Tool **(64)** zur Charakterisierung mindestens einer Aktion, die der Anwender durchgeführt hat, in Abhängigkeit der mindestens einen detektierten Zeichenkette,
wobei das Charakterisierungstool dafür ausgelegt ist, dass:
- das Charakterisierungstool **(64)**, wenn erkannt wurde, dass der Anwender eine Software im Format ".exe" heruntergeladen hat und dass er die Ausführung dieser Software in einer Eingabeaufforderung gestartet hat, den Namen des ausgeführten Informatikprogramms in einer Datenbank sucht, und
· die Aktion des Anwenders, wenn der Name des ausgeführten Informatikprogramms einer Erpressungssoftware oder einer Software zum Schürfen von Kryptowährungen entspricht, in eine Kategorie eingestuft werden kann, die einer Kategorie "direktes Hacking" entspricht, und
· die Aktion des Anwenders, wenn der Name der verwendeten Software mit Angriffen vom Typ Brute-Force oder DDoS in Verbindung steht, derart eingestuft werden kann, dass es sich um eine Aktion des "indirekten Hackings" handelt,
- die Aktion des Anwenders, wenn eine Bankkartennummer oder eine Bankkontonummer und eine Onlinehandelsplattform detektiert werden, derart eingestuft werden kann, dass es sich um eine "Betrugs"-Aktion handelt, und
- die Aktion des Anwenders, wenn die Anzahl detektierter Emails einen Schwellenwert überschreitet, derart eingestuft werden kann, dass es sich um eine "Betrugs"-Aktion vom Typ Phishing handelt.

2. Analysevorrichtung nach Anspruch 1, ***wobei*** der vorbestimmte Befehl dem Eingabebefehl und/oder dem Tabulatorbefehl der Tastatur und/oder einem Mausklick entspricht.

3. Analysevorrichtung nach einem der Ansprüche 1 bis 2, ***wobei*** das Analysetool **(63)** einen Ausdruck vom Typ "preg_match" verwendet.

4. Analysevorrichtung nach einem der Ansprüche 1 bis 3, ***wobei*** die Texte, welche das Umwandlungstool **(62)** ausgibt, automatisch übersetzt werden, indem beispielsweise die Eingabesprache erkannt wird, welche der Anwender verwendet hat.

5. Analysevorrichtung nach einem der Ansprüche 1 bis 4, ***wobei*** es das Analysetool **(63)** ermöglicht, Folgendes zu detektieren:
- eine URL, indem beispielsweise eine Zeichenkette gesucht wird, welche die Zeichenfolge "url", "//" oder "www" enthält, und/oder
- eine Bankkartennummer, indem beispielsweise eine Zeichenkette aus 16 Ziffern gesucht wird, und/oder
- eine Postleitzahl, indem beispielsweise ein Zeichenkette aus genau 5 Ziffern gesucht wird, und/oder
- eine IPv4-Internetadresse, beispielsweise mittels einer Gesamtheit von vier Zeichenketten aus drei Ziffern, die jeweils über "." verbunden sind, und/oder
- eine IPv6-Internetadresse, beispielsweise mittels einer Gesamtheit von acht Zeichenketten, die jeweils über "." verbunden sind, und/oder
- eine Emailadresse, beispielsweise mittels einer Zeichenkette, die ein "." und ein "@" aufweist, und/oder
- eine Bankkontonummer, beispielsweise ein französische Kontonummer im IBAN-Format, mittels einer Zeichenkette, die 2 Buchstaben gefolgt von 23 Ziffern enthält.

6. Analysevorrichtung nach einem der Ansprüche 1 bis 5, ***wobei*** das Charakterisierungstool **(64)** dafür ausgelegt ist, dass im Falle der Detektion einer Bankkartennummer oder einer Bankkontonummer und einer Onlinehandelsplattform der Name der Onlinehandelsplattform gesucht werden kann, um automatisch den Internet-Administrator zu kontaktieren, der für diese Handelsplattform bekannt ist.

7. Analysevorrichtung nach einem der Ansprüche 1 bis 6, ***wobei*** das Charakterisierungstool **(64)** dafür ausgelegt ist, dass ein Informations-Email automatisch an sämtliche Zielgruppen des Angriffs übermittelt werden kann, wenn die Anzahl an detektierten Emails einen Schwellenwert überschreitet.

8. Analysevorrichtung nach einem der Ansprüche 1 bis 7, ***wobei sie dafür ausgelegt ist***, dass die Texte, welche das Umwandlungstool **(62)** ausgibt, in eine Suchmaschine eingespeist werden können.

## Claims

1. A device **(60)** for automated analysis of the actions of a user remotely connected to a server **(14)** acting as a decoy comprising a tool **(61)** for capturing at least one image of a session of said user,
said sensing tool **(61)** being controlled asynchronously by detecting the use of at least one predefined command;
said analysis device **(60)** comprising:
- a tool **(62)** for transcribing into text the at least one image captured by the capture tool **(61)**,
- an analysis tool **(63)** for detecting at least one predetermined character string inside the text captured by the transcription tool **(62)**; and
- a tool **(64)** for characterising at least one action performed by the user according to said at least one detected character string,
the characterisation tool being configured such that:
- when it is identified that the user has downloaded software in the ".exe" format and initiates the execution of this software in a command prompt, the characterisation tool **(64)** searches for the name of the computer program executed in a database and
· if the name of the computer program executed corresponds to ransomware or cryptocurrency mining software, the user's action may be **characterised in** a category corresponding to a "direct hacking" category, and
· if the name of the software used is associated with brute force or DDOS attacks, the user action may be characterised as an "indirect hacking" action,
- when a bank card number or a bank account number and an e-commerce website are detected, the user's action may be characterised as a "fraud" action, and
- when the number of detected emails is greater than a threshold, the user's action may be characterised as a "fraud" action of the phishing-type.

2. The analysis device according to claim 1, ***wherein*** said predefined command corresponds to the input command and/or the keyboard tab command and/or a mouse click.

3. The analysis device as claimed in claim 1 or claim 2, ***wherein*** said analysis tool **(63)** uses an expression of the "preg_match" type.

4. The analysis device according to any one of claims 1 to 3, ***wherein*** the texts obtained from the transcription tool **(62)** are automatically translated, for example by identifying the keyboard language used by the user.

5. The analysis device according to any one of claims 1 to 4, ***wherein*** the analysis tool **(63)** makes it possible to detect:
- a URL, for example by searching for a character string containing the sequences of characters "url", "//" or "www", and/or
- a credit card number, for example by searching for a character string consisting of 16 digits, and/or
- a postal code, for example by searching for a character string consisting of exactly five digits, and/or
- an IPv4 internet address, for example by means of a set of four character strings connected by ".", and/or
- an IPv6 internet address, for example by means of a set of eight character strings connected by ".", and/or
- an email address, for example by means of a character string with a ". "and an"@", and/or
- a bank account number, for example a French account number in MAN format, by means of a character string containing 2 letters followed by 23 digits.

6. The analysis device according to one of claims 1 to 5, ***wherein*** the characterisation tool **(64)** is configured so that, when a bank card number or a bank account number and an e-commerce website are detected, the name of the e-commerce website can be searched in order to automatically contact the known IT administrator for this e-commerce website.

7. The analysis device according to any one of claims 1 to 6, ***wherein*** the characterisation tool **(64)** is configured so that, when the number of detected emails is greater than a threshold, an information email may be automatically send to all targets of the attack.

8. The analysis device according to any one of claims 1 to 7, ***configured so that*** the texts obtained from the transcription tool **(62)** can be used to feed a search engine.
